# EUROPEAN PATENT APPLICATION

(11) **EP 1 496 349 A1**
(43) Date of publication of application: **12.01.2005**
(21) Application number: 04016108.5
(22) Date of filing: 08.07.2004
(51) Int. Cl.: G01N 15/14, G01N 21/64, G01J 3/10

(54) **Light irradiating apparatus for cell sorter**

(30) Priority: 09.07.2003 JP 2003194410
(71) Applicant: Aisin Seiki Kabushiki Kaisha, Kariya-shi, Aichi-ken 448-8650 (JP)
(72) Inventor: Kanai, Naritoshi, Kariya Aichi, 448-8650 (JP)
(74) Representative: Leson, Thomas Johannes Alois, Dipl.-Ing.

(57) **Abstract**

According to an aspect of the present invention, the present invention provides a light irradiating apparatus (1) for a cell sorter for irradiating light to a specimen in a sample liquid and for detecting scattered light or fluorescence intensity to analyze the specimen. According to the light irradiating apparatus for a cell sorter, light at plural wavelengths is generated from a single light source (10) by separately extracting light at plural wavelengths respectively, by collecting the extracted light, and by focusing the collected light to be irradiated to a position (P) where the sample liquid passes through.

## Description

### FIELD OF THE INVENTION

This invention generally relates to a light irradiating apparatus. More particularly, the present invention pertains to a light irradiating apparatus for a cell sorter.

### BACKGROUND

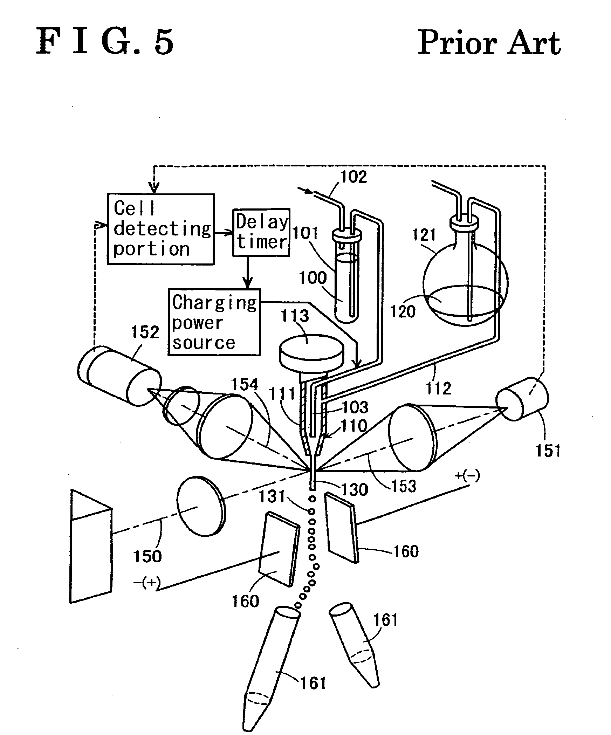

Cell sorters detect, identify, collect and analyze large quantity of alive cell at high speed by irradiating light to the cell in a liquid fluid, and detecting side scattered light and fluorescence from the cell. With a known cell sorter described in Japanese Patent Laid-Open publication No.1994-288896 as shown in Fig. 5, specimen is detected and selectively collected as follows.

A sample liquid 100 including the specimen such as a dyed cell, or the like, is stored in a sample tube 101. A gas introduction tube 102 and a first end of a jetting tube 103 are connected to the sample tube 101. A second end of the jetting tube 103 is inserted to a jet nozzle 110. A jetting hole 111 is provided at a lower end of the jetting tube 110. Physiological saline (a sheath liquid) 120 is stored in a storage tank 121. A first end of a connecting tube 112 is connected to the storage tank 121. A second end of the connecting tube 112 is connected to the side of the jetting nozzle 110.

A sample liquid 100 is pushed by gas pressure introduced via the gas introduction tube 102, and introduced to the jetting nozzle 110 via the jetting tube 103, and jetted to the jetting hole 111. Similarly, the sheath liquid 120 is pushed by gas pressure, and is introduced to the jet nozzle 110 via connecting tube 112, and flows down from the jetting hole 111 to the outside of the jetting nozzle 110 as laminar flow. The sample liquid 100 jetted from the jetting tube is mixed with the sheath liquid 120 in the jetting nozzle 110 and thus flows from the jetting hole 111 similarly. A flowing mixed liquid (jet fluid) 130 is irradiated by laser light 150 to emit scattered light 153 and 154. The scattered light 153, 154 is detected by detectors 151, 152 positioned ahead of the laser light 150 and at side of the laser light 150. Information of a cell size is detected by detecting forward scattered light 153. And, internal structure, characteristics and properties of the cell are detected by the side scattered light 154 because the scattered light is uniquely changed depending on a refractive index and a formation of the cell. Further, by detection of the forward scattered light 153 or the side scattered light, it is found that desired cell passes at the position irradiated by the laser light.

A supersonic oscillator apparatus 113 is provided at an upper end of the jet nozzle 110. A mixture liquid flow 130 injected from the jet nozzle 110 is vibrated by the supersonic oscillator apparatus 113 and drops as droplets 131 having approximate uniform particle size. Accordingly, by charging the droplet 131 including the desired cell detected by the scattered light or fluorescence, and by applying a specifically polarized voltage between a pair of electrodes 160, 160 positioned at downstream direction of the flow to pull the charged cell to one of the electrodes during dropping, the desired cell is collected to one of specific collector tubes 161, 161 positioned further downstream direction of the flow.

A fluorescence dye for dying the specimen has specific range of an excitation wavelength and an emission wavelength, and emits emission (fluorescence) at specific range of a wavelength. Using two or three kind of the fluorescence dye, plural cell properties are measured simultaneously. But if single monochromatic light is used for excitation, plural cell properties are measured simultaneously only when the fluorescence dyes have similar excitation wavelength range. Using respective different wavelengths of plural lasers, the fluorescence dyes having different excitation wavelengths each other becomes applicable, then variety of the applicable dyes are broadened.

Thus, plural monochromatic light is irradiated to the specimen as described in catalog of EPICS® ALTRA™ HyperSort and EPICS® ALTRA™ MultiCOMP / EPICS® ALTRA™. The sample liquid including the cell as the specimen is mixed with the sheath liquid coming out in laminar flow. The sample liquid is irradiated by the light and emits the scattered light. Size, internal structure, characteristics and properties of the cell are detected by detecting the scattered light. Further, by applying voltage between electrodes, the cell is charged to be pulled toward one of the collectors to be collected by the collector tube.

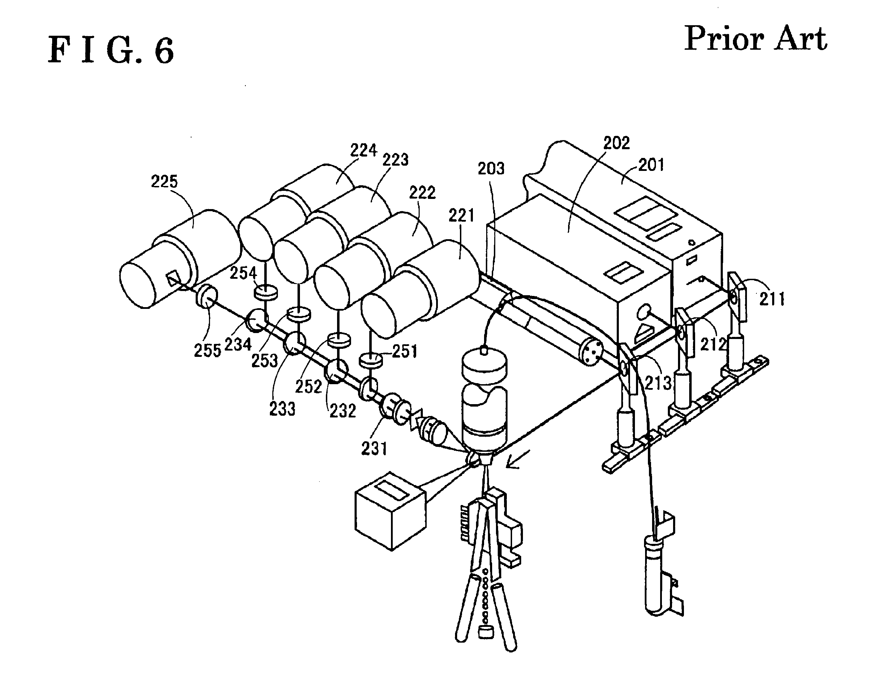

The cell sorter includes three lasers 201, 202, 203 for irradiating three monochromatic light to the specimen simultaneously as described in the catalog of EPICS® ALTRA™ HyperSort and EPICS® ALTRA™ MultiCOMP / EPICS® ALTRA™ shown in Fig. 6. The laser light emitted by the lasers are introduced to the specimen via dichroic mirrors 211, 212, 213 and the light axes of the laser light are adjusted to irradiate the laser light simultaneously to the specimen in the sample liquid.

A size of the cell is detected by the forward scattered light, and the internal structure, the characteristics and the properties are detected by the side scattered light and the fluorescence. To detect the side scattered light and the fluorescence light emitted from the specimen has to be separated to objective wavelength and focused to a proper detectors. Five detectors 221-225 are positioned for detecting the side scattered light and the fluorescence. The scattered light and fluorescence light are separated to the specific wavelength by filters and mirrors. Specifically, dichroic mirrors 231-234 that reflect light shorter than a predetermined wavelength and transmits the light equal to or longer than the predetermined wavelength, and bandpass filters 251-255 that transmit light at range ± 15 ∼ 20 nm of the predetermined wavelength are positioned as shown in Fig. 6.

However, in the cell sorter described in the catalog of EPICS® ALTRA™ HyperSort and EPICS® ALTRA™ MultiCOMP / EPICS® ALTRA™ shown in Fig. 6, the light axes of the lasers 201, 202, 203 have to be adjusted to irradiate the light of different wavelengths of the respective lasers simultaneously to the specimen passing through the irradiated position. However, because an adjustment of the light axes of the laser light is highly difficult work, exchange of lasers 201, 202, 203 is really troublesome work.

Further; because the laser 201, 202, 203 has each different lifetime (decrease of a luminous energy) of emitting light, intensity balance of each color becomes unstable when some of the lasers come to end of their life. Therefore, to maintain the intensity balance of each laser light, it is required to check and replace each laser in a proper period. However, the check and the replacement of each laser are also troublesome work because the lifetime period of each laser 201, 202, 203 is different. Further, the lasers 201, 202, 203 are extremely costly, which increases a cost of the cell sorter. In addition, the lasers 201, 202, 203 are large in size, and occupy the large area relative to the total area of the cell sorter, which increases the size of the cell sorter.

A need thus exists for a light irradiating apparatus for a cell sorter which simultaneously irradiates light with plural specific peak wavelengths from a single light source to the specimen.

### SUMMARY OF THE INVENTION

According to an aspect of the present invention, the present invention provides a light irradiating apparatus for a cell sorter for irradiating light to a specimen in a sample liquid and for detecting scattered light or fluorescence intensity to analyze the specimen. According to the light irradiating apparatus for a cell sorter, light at plural wavelengths is generated from a single light source by separately extracting light at plural wavelengths respectively, by collecting the extracted light, and by focusing the collected light to be irradiated to a position where the sample liquid passes through.

According to the embodiment of the present invention, an intensity balance of the light is maintained to be constant. The replacement of the light source is managed by checking the lifetime of the single white light source, and the check and the replacement work of the light sources becomes easier.

### BRIEF DESCRIPTION OF THE DRAWINGS

The foregoing and additional features and characteristics of the present invention will become more apparent from the following detailed description considered with reference to the accompanying drawings, wherein:

Fig. 1 shows irradiating light source for a cell sorter according to a first embodiment of the present invention.

Fig. 2 shows irradiating light source for a cell sorter according to a second embodiment of the present invention.

Fig. 3 shows an drawing of a high pressure mercury discharge lamp.

Fig. 4 shows an emission spectrum of a high pressure mercury discharge lamp.

Fig. 5 shows structure of a known cell sorter.

Fig. 6 shows a known cell sorter irradiating plural laser light to specimen.

### DETAILED DESCRIPTION

Embodiments of the present invention will be explained with reference to the illustrations of the drawing figures as follows. A cell sorter including light irradiating apparatus of the present invention is structured as follows. A sample liquid including specimen such as a cell mixed with sheath liquid is coming out in laminar flow. Plural monochromatic light is simultaneously irradiated to the specimen. Size, internal structure, or the like, of the specimen are detected by detecting forward scattered light, side scattered light, fluorescence emitted by the specimen irradiated by the light. The detected specific specimen is charged by applied voltage to be collected.

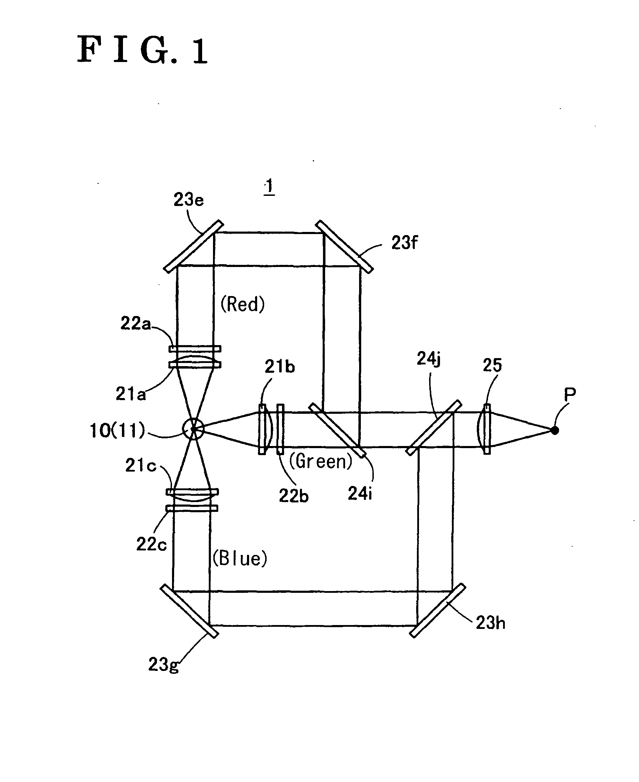

Fig. 1 shows a light irradiating apparatus 1 for a cell sorter according to a first embodiment of the present invention. The irradiating light source for a cell sorter 1 includes a white light source 10. The irradiating light apparatus 1 is structured to irradiate plural monochromatic light separately extracted from the white light source 10 and is collected. As the white light source 10, for example, a high pressure mercury lamp is used.

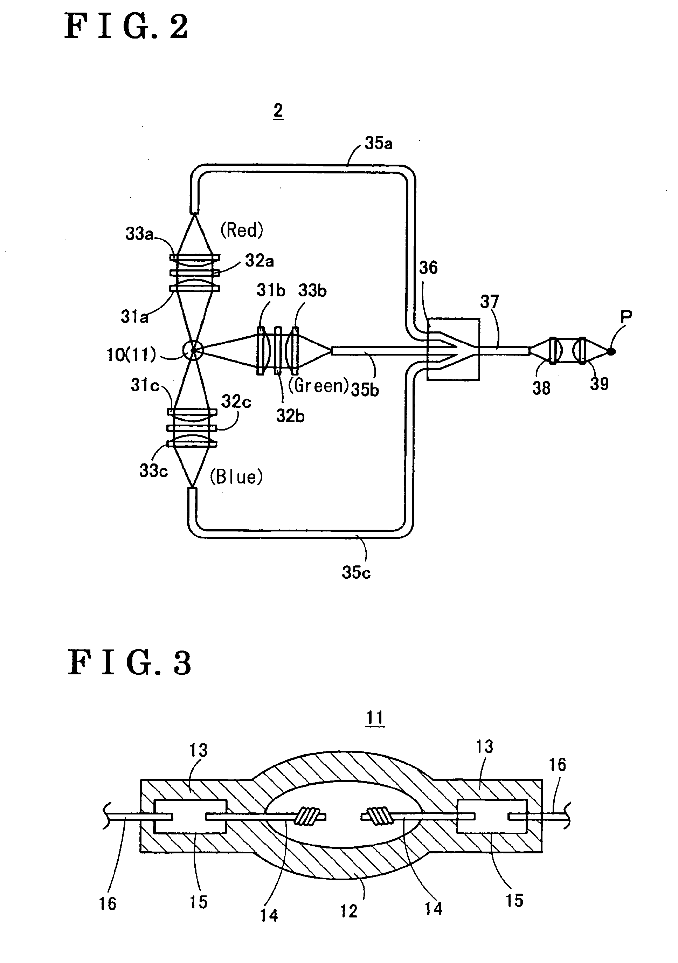

A structure of a high pressure mercury lamp is described, for example, in Japanese Patent Laid-Open Publication No. 1999-297269. Fig. 3 shows a drawing of a high pressure mercury discharge lamp according to the Publication No. 1999-297269. The high pressure mercury lamp 11 is made of a quartz glass, includes a discharge bulb portion 12 provided at the center, and a vertically elongated seal portions 13, 13 connected to both ends of the discharge bulb portion 12. First ends of a pair of electrodes 14, 14 are positioned having a clearance about 1.2 mm therebetween at an emission space in the discharge bulb 12. Second ends of the electrodes 14, 14 are buried into the seal portions 13, 13 and welded at a metal foils 15, 15. Other ends of the metal foils 15, 15 are connected to outer leads 16,16. Mercury is sealed in the emission space as a major emitting material, and noble gases, such as Argon, Xenon, or the like, are sealed in the emission space as an ignition and starting gas.

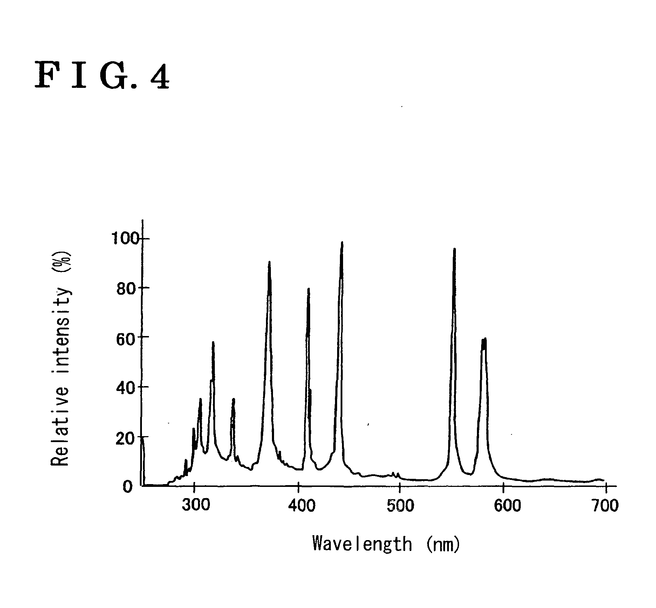

In case the high pressure mercury lamp is used as the white light source 10, light showing highly intense line at specific wavelengths in spectrum thereof shown in Fig. 4 is emitted from the white light source 10. With the light irradiating apparatus 1 for the cell sorter in the first embodiment of the invention, a light source emitting light at plural specific peak wavelengths is used as the white light source 10, and an each light at each specific wavelength is separately extracted from the light emitted from the white light source 10. Further each separated monochromatic light is collected with other monochromatic light, and the collected light is irradiated to the specimen in the sample liquid. Not only the high pressure mercury lamp, but also a UV lamp, a Xenon lamp, a metal halide lamp, or the like, showing highly intense line at specific wavelengths in spectrum thereof, may be used as the white light source 10 in the first embodiment of the invention.

A structure of a light irradiating apparatus 1 for a cell sorter will be explained with example. Here, for the explanatory purpose, the white light source 10 used in the embodiment does not show the spectrum shown in Fig. 4, and has intense peaks at about 650 nm in red range, about 530 nm in green range, about 488 nm in blue range. As stated above, various kinds of light source having peaks at different wavelengths from light source stated above may be employed in practice. In the embodiments, intense peaks at 650 nm in red range, at 530 nm in green range, 488 nm in blue range are defined as red light, green light, blue light for convenience of explanation. Although light at these wavelengths are used in this embodiments, in practice, the wavelength range and used wavelengths are not limited as stated above. Wavelength range and used wavelengths in practice may be freely selected corresponding to light source in use, or the specimen to be measured.

Around the white light source 10, a light extracting member is positioned. The light extracting member includes three plane-convex lenses 21a, 21b, 21c and optical filters 22a, 22b, 22c. The three plane-convex lenses 21a, 21b, 21c are positioned to collimate the emitted light. And an opposite side of the light source relative to the lens, the plane-convex lenses 21a, 21b, 21c, the optical filters 22a, 22b, 22c are positioned respectively. The light is collimated by the lenses 21a, 21b, 21c to the optical filters 22a, 22b, 22c for efficiently extracting light at specific wavelength. The optical filters 22a, 22b, and 22c are optical filters transmitting the light at least at 650 nm in wavelength for transmitting red light, transmitting the light at least at 530 nm in wavelength for transmitting green light, transmitting the light at least at 488 nm in wavelength for transmitting blue light respectively. The filters 22a, 22b, 22c may be selected to extract light at objective wavelength corresponding to the light source serving as the white light source 10 in practice.

A light directing member and a light collecting member are positioned at the light irradiating apparatus 1 for a cell sorter to collect each monochromatic light having passed through each optical filter 22a, 22b, 22c, to a focusing lens 25. Reflecting mirrors (serving as first mirror members) 23e, 23f, 23g, 23h is used serving as a directing means, and dichroic mirrors 24i, 24j (serving as second mirror members) is used serving as a collecting member. The green light is introduced straightforward to the focusing lens 25 serving as an irradiating member, and the red light and the blue light is reflected at the reflecting mirrors and dichroic mirrors to be collected with the green light respectively. The dichroic mirrors 24i, 24j are positioned on the green light path to collect the light. At this structure, the green light incidents to a first surface, and the red light incidents to a second surface of the dichroic mirror 24i serving as collecting member for selectively transmitting the green light, and reflecting the red light. For this purpose, a dichroic mirror, or the like, transmitting light at around 530 nm in wavelength, and reflecting, or the like, other light is used for the dichroic mirror 24i. Further, the green light and the red light incidents to a first surface, and the blue light incidents to a second surface of the dichroic mirror 24j serving as collecting member for selectively transmitting the red light and the green light, and reflecting the blue light. The dichroic mirror 24j selectively transmits red light and green light, and reflects blue light. For this purpose, a dichroic mirror, or the like, that transmits light at least at about 530 nm∼650 nm in wavelength range including both wavelength range of the red light and the green light, and reflects, or the like, light at other wavelength range, is used for the dichroic mirror 24j.

At the light irradiating apparatus 1 for the cell sorter, the light emitted from the white light source 10 emitting light at specific peak wavelengths is collimated by three planer-convex lenses 21a, 21b, 21c provided at three positions. Then, the red light, the green light, the blue light is extracted by the optical filters 22a, 22b, 22c serving as a light separating member respectively from the collimated light. The green light extracted by the optical filter 22b is introduced to pass through the dichroic mirrors 24i, 24j to reach the focusing lens 25 straightforward. The red light extracted by the optical filter 22a is introduced to be reflected by the reflecting mirrors 23e, 23f, to be reflected by the dichroic mirror 24i, to pass through the dichroic mirror 24j, and to reach the focusing lens 25. Further, the blue light extracted by the optical filter 22c is introduced to be reflected by the reflecting mirrors 23g, 23h, and to be reflected by the dichroic mirror 24j to reach the focusing lens 25. Thus, each introduced the red, the blue and the green monochromatic light is collected, incidents to the focusing lens 25, and is simultaneously irradiated to the irradiated position P where the specimen in the sample liquid passes through.

Accordingly, when the light irradiating apparatus 1 for the cell sorter in the first embodiment of the invention is used, because the plural monochromatic light extracted from single light source used as white light source 10 is irradiated to the specimen, an intensity balance of the light is maintained to be constant at any time. Further, because single light source is used as white light source 10, the replacement of the light source is managed by checking the lifetime of the single white light source 10. It is not necessary to consider different replacement periods of the plural light sources, and the check and the replacement work of the light sources becomes easier. Further, because the high pressure mercury lamp emitting the light at specific peak wavelengths is used as the white light source 10, the light at the objective wavelengths is obtained at high intensity with the optical filters 22a, 22b, 22c.

The light irradiating apparatus 1 for a cell sorter includes the white light source 10 such as the high pressure mercury lamp, the plane-convex lenses 21a, 21b, 21c, 25, the optical filters 22a, 22b, 22c, the reflecting mirrors 23e, 23f, 23g, 23h, and the dichroic mirrors 24i and 24j. With the construction of the light irradiating apparatus 1 for the cell sorter, the cost is lower than purchasing plural laser oscillator, which reduces the cost of the cell sorter. In addition, an assembling of the white light source 10 is easier. Because the red, the green, the blue monochromatic light is extracted from the single white light source 10 and collected to the focusing lens 25 to be irradiated, a difficult alignment of an optical axes that is required when plural lasers are used becomes unnecessary. Further, because the high pressure mercury lamp serving as the white light source 10 is small and the reflecting mirrors serving as a light directing member for light at respective wavelengths are positioned in narrow space, the area occupied by the light irradiating apparatus 1 in the cell sorter is reduced.

A light irradiating apparatus 2 for a cell sorter according to a the second embodiment of the present invention is shown in Fig. 2. The light irradiating apparatus 2 for the cell sorter in the second embodiment includes a single white light source 10. The light from the white light source 10 is separated to monochromatic light at respective objective wavelength, and collected likewise the first embodiment. As the white light source 10, not only a high pressure mercury lamp, but also a UV lamp, a Xenon lamp, a metal halide lamp may be used. Here, for the explanatory purpose, the light source 10 used in the embodiment has intense peaks at about 650 nm in red range, about 530 nm in green range, about 488 nm in blue range likewise the embodiment 1. For explanatory purpose, intense peaks at 650nm in red range, at 530 nm in green range, 488 nm in blue range are defined as red light, green light, and blue light respectively. Various kinds of light sources emitting light at different peak wavelengths from light source stated above may be employed in practice likewise the first embodiment. Wavelength range, wavelengths in practice may be freely selected corresponding to light source in use and specimen to be measured in practice likewise the first embodiment.

In the second embodiment, optical fibers 35a, 35b, 35c are used for directing member for monochromatic light. Plane-convex lenses 31a, 31b, 31c, optical filters 32a, 32b, 32c serving as a light extracting member, and focusing lenses 33a, 33b, 33c are respectively positioned at the three positions around the white light source 10 for collimating the light emitted from the white light source 10, and for selectively extracting the red, green and blue monochromatic light from the collimated light, and for focusing the light having passed through the optical filters 32a, 32b, 32c to the entrance of the optical fibers 35a, 35b, 35c. The optical fiber 35a, 35b, 35c are positioned at focused positions of the focused light. The optical fiber 35a, 35b, 35c are connected to the optical coupler 36. The light is coupled at the optical coupler 36 serving as a collecting member. The fiber 35a, 35b, 35c are connected at the optical coupler 36 to form a single optical fiber 37. A plane-convex lens 38 and a focusing lens 39 serving as an irradiating member are positioned at an end of the optical fiber 37. Thus, the light outputted from the optical fiber 37 is focused at the irradiated position P where the specimen passes through.

With the light irradiating apparatus 2 in the second embodiment, the light at specific peak wavelengths is emitted from the white light source 10. The light is collimated by the plane-convex lenses 31a, 31b, 31c. Then, the red, green, and blue light are extracted by the optical filters 32a, 32b, 32c from the collimated light. The light of respective wavelengths extracted by the optical filters 32a, 32b, 32c, are focused by the focusing lenses 33a, 33b, 33c, and introduced to the optical fibers 35a, 35b, 35c. The red, the green, and the blue light passes through the respective optical fibers 35a, 35b, 35c, reaches the optical coupler 36 to be coupled and to be introduced to the single optical fiber 37, and is outputted from the optical fiber 37. The red, the blue and the green light at respective different wavelengths are simultaneously irradiated at the irradiated position P where the specimen in the liquid sample passes through.

Accordingly, with the light irradiating apparatus 2 for a cell sorter according to the second embodiment of the invention, because the single white light source 10 is used as the light source, and the plural monochromatic light extracted from the emitted light is irradiated to the specimen, an intensity balance of the light is maintained to be constant. Because the single white light source 10 is used as the light source, the replacement of the light source is managed by checking the lifetime of the single white light source 10. It is not necessary to consider different replacement periods of the plural light sources, and the check and the replacement work of the light sources becomes easier. Further, because the high pressure mercury lamp emitting the light at specific peak wavelengths is used as the white light source 10, the light at the respective objective wavelengths is obtained at high intensity with the optical filters 32a, 32b, 32c.

The light irradiating apparatus 2 for a cell sorter includes the white light source 10 such as the high pressure mercury lamp, the plane-convex lenses 31a, 31b, 31c, 33a, 33b, 33c, 38, 39, the optical filters 32a, 32b, 32c, the optical coupler 36, and the optical fibers 35a, 35b, 35c, 37. With the construction of the light irradiating apparatus 2 for cell sorter, the cost is lower than purchasing plural laser oscillator, which reduces the cost of the cell sorter. In addition, an assembling of the white light source 10 is easier. Because the red, the green, the blue monochromatic light is extracted from the single white light source 10, and collected via the optical fibers 35a, 35b, 35c, 37, and irradiated to the irradiated position P from the focusing lenses 38, 39, the difficult alignment of an optical axes that is required when plural lasers are used becomes unnecessary. Further, because the high pressure mercury lamp serving as the white light source 10 is small, and the optical fibers 35a, 35b, 35c for introducing light at respective wavelengths are positioned narrow space, the area occupied by the light irradiating apparatus 2 in the cell sorter is reduced. And because the optical fibers 35a, 35b, 35c are configured to be flexible, the optical fibers 35a, 35b, 35c between the focusing lenses 33a, 33b, 33c and the optical coupler 36 may be positioned anywhere and durable from the vibration.

The invention is not restricted to the light irradiating apparatus for the cell sorter according to the first and second embodiments, and variations and changes may be made without departing from the spirit of the present invention. For example, the white light source 10 in the first and second embodiments are explained as the light having peaks at red, blue and green range in wavelength. The high pressure mercury lamp serving as the white light source 10 does not always have peaks at the desired wavelengths. Meanwhile, each fluorescence dye has a specific excitation wavelength range and an emission wavelength range, absorbs light in specific wavelength range, and emits the emission (fluorescence) light in specific wavelength range. Accordingly, even if the high pressure mercury lamp, or the like, does not have peaks at desired wavelengths, the specimen can be detected by selecting the fluorescence dye corresponding to the peak wavelengths included in the emission from the white light source 10.

In the first embodiment and second embodiment, although the optical filters 22a, 22b, 22c, 32a, 32b, 32c are used to extract the light at respective specific peak wavelengths, a prism or a diffraction grating may be used instead of the optical filters 22a, 22b, 22c, 32a, 32b, 32c. The optical filters 22a, 22b, 22c, 32a, 32b, 32c may be automatically exchanged to extract light at different peak wavelength. Accordingly, the characteristics of the specimen is detected via more various modes depending on purposes by one cell sorter. Further, the number of peaks of light at the peak wavelengths extracted from the white light source 10 is not restricted, and the number of peaks may be equal to or greater than or less than three.

According to the embodiment of the present invention, an intensity balance of the light is maintained to be constant. The replacement of the light source is managed checking by checking the lifetime of the single light source, and the check and the replacement work of the light sources becomes easier.
According to an aspect of the present invention, the present invention provides a light irradiating apparatus for a cell sorter for irradiating light to a specimen in a sample liquid and for detecting scattered light or fluorescence intensity to analyze the specimen. According to the light irradiating apparatus for a cell sorter, light at plural wavelengths is generated from a single light source by separately extracting light at plural wavelengths respectively, by collecting the extracted light, and by focusing the collected light to be irradiated to a position where the sample liquid passes through.

## Claims

1. A light irradiating apparatus that irradiates a plurality of monochromatic light at a plurality of respective specific peak wavelengths to a specimen in a sample liquid for a cell sorter, **characterized in that**
the plurality of monochromatic light at the plurality of respective specific peak wavelengths are extracted from a single light source.

2. The light irradiating apparatus according to Claim 1, wherein
the plurality of light axes of the monochromatic light is collected to a single light axis.

3. A light irradiating apparatus for a cell sorter for irradiating light to a specimen in a sample liquid, **characterized in that** the irradiating apparatus comprises a light source for emitting light at a plurality of wavelengths, a light extracting member for separately extracting a plurality of monochromatic light from the emitted light, said respective monochromatic light having respective peak wavelengths, a directing member for directing said monochromatic light extracted by the light extracting member, and an irradiating member for simultaneously irradiating said plurality of monochromatic light to a position where the sample liquid passes through.

4. The light irradiating apparatus according to Claim 3, wherein
the light irradiating apparatus further comprises a collecting member for collecting said directed monochromatic light directed by the directed member.

5. The light irradiating apparatus according to Claim 3-4, wherein
the light extracting member comprises a plurality of first lens members for collimating light from the light source, and a plurality of light separating members for extracting said respective monochromatic light at said respective specific wavelengths from the light collimated by the plurality of the first lens members.

6. The light irradiating apparatus according to Claim 3-5, wherein
the directing member comprises a plurality of first mirror members for reflecting said monochromatic light extracted by the light extracting member.

7. The light irradiating apparatus according to Claim 4, wherein
the collecting member comprises a plurality of second mirror members for reflecting or transmitting said monochromatic light which is extracted by the light extracting member and the light which is reflected by the first mirror member.

8. The light irradiating apparatus according to Claim 3, wherein
the directing member comprises a plurality of optical fiber members for directing said respective monochromatic light extracted by the light extracting member.

9. The light irradiating apparatus according to Claim 8, wherein
the collecting member comprises an optical coupler connected to the optical fiber member for coupling the plurality of monochromatic light passing through the optical fiber members.

10. A method for irradiating light to a specimen in a sample liquid by an irradiating apparatus for a cell sorter, **characterized in that**
a plurality of monochromatic light at a respective specific peak wavelengths is extracted from a single light source, and the plurality of extracted monochromatic light are simultaneously irradiated to a position where the sample liquid passes through.
